# EUROPEAN PATENT SPECIFICATION

(11) **EP 1 851 980 B1**
(45) Date of publication and mention of the grant of the patent: **09.07.2014**
(21) Application number: 05711097.5
(22) Date of filing: 21.02.2005
(51) Int. Cl.: H04W 28/20

(54) **SELECTING CHANNEL BANDWIDTH AND DATA ERROR TARGET DYNAMICALLY BASED ON A DETERMINED TRANSMISSION NEED**
DYNAMISCHE AUSWAHL VON KANALBANDBREITE UND DATENFEHLERZIEL AUF DER BASIS EINES BESTIMMTEN ÜBERTRAGUNGSBEDARFS
PROCEDE POUR SELECTIONNER DE MANIERE DYNAMIQUE UNE LARGEUR DE BANDE DE CANAL ET UNE CIBLE D'ERREUR DE DONNEES SUR LA BASE D'UN BESOIN DE TRANSMISSION DEFINI

(43) Date of publication of application: 07.11.2007
(73) Proprietor: Unwired Planet International Limited, Dublin 2 (IE)
(72) Inventor: SIMONSSON, Arne, S-954 33 Gammelstad (SE); PETTERSSON, Jonas, S-975 92 LULEA (SE); ERICSON, Mårten, S-976 31 Lulea (SE); MEYER, Michael, 52080 Aachen (DE); PEISA, Janne, FI-02130 Espoo (FI)
(74) Representative: McCann, Heather Alison
(86) International application number: PCT/SE2005/000237
(87) International publication number: WO 2006/088401

(56) References cited:
- WO-A1-02/082685
- WO-A1-2004/004396
- LIANG X.D. ET AL.: 'TECHNOLOGIES FOR 4G MOBILE COMMUNICATIONS DYNAMIC BANDWIDTH ALLOCATION WITH FAIR SCHEDULING FOR WCDMA SYSTEMS' IEEE WIRELESS COMMUNICATIONS vol. 9, no. 2, April 2002, pages 26 - 32, XP011093851

## Description

### FIELD OF THE INVENTION

The present invention relates to communication nodes and methods for transmitting data in a packet data communication system, and more particularly it relates to nodes and methods for transmitting data in a mobile communication system having transmission channels with different transmission capacities.

### BACKGROUND OF THE INVENTION

In a mobile communication system, such as a cellular telecommunication system, a communication service is provided to users in the system by partitioning an area into different cells, wherein each cell covers a geographical area. The system comprises several base stations, each base station providing wireless connection in a cell, such that a mobile station currently residing in a cell will have the possibility to communicate with the base station and get in contact with the rest of the communication system via a wireless channel established between the base station and the mobile station.

A Wideband Code Division Multiple Access (W-CDMA) system is an example of a mobile communication system that has been developed for efficiently transmitting both data and voice to and from mobile stations in the system. In such a system, the wireless channels use a wireless carrier frequency and different spreading codes such that the wireless channels can be distinguished from each other. To improve the usability of the system for the user, various types of wireless channels are provided having different transmission capabilities and different channel bandwidth. When transmitting data over a wireless connection, the data may be transmitted over different channels and at different transmission rates between the mobile station and the base station, depending on e.g. the type of information to be transmitted and the type of subscription that a user of the mobile station has acquired.

In a communication system such as a W-CDMA system there are Radio Network Controllers (RNCs) that control different parts of the radio network, i.e. a number of base stations. An RNC controls the connections between the radio network and the mobile stations. Such a connection is set up as a Radio Access Bearer (RAB), which is a logical connection between the mobile station and the RNC. A RAB uses different radio channels for the connection. A RAB that is used by a so called best effort user may be switched between channels having different transmission capabilities, depending on e.g. the transmission need. The function controlling the selection of channel and the switching between channels is called channel switching. Channel switching handles switching between channels with different bandwidth to thereby be able to support a connection with a desired transmission rate.

Prior art documents WO 99/66748 A1 and US 2002/0077110 A1 describe systems for channel switching wherein system resources are used depending on the transmission need over a connection. In these systems, channel switching between channels with different transmission capabilities is based on the bandwidth desired for a connection. For this reason, the predicted traffic is measured by e.g. measuring the amount of information in queue for a data connection, such as a buffer load of a transmission buffer in a node in the system or by measuring the amount of information currently being transmitted. The measure of the predicted traffic is compared with thresholds to decide which type of radio channel that should bear the connection. When the measured information rises above or sinks below a certain threshold, the connection is switched to a radio channel with higher or lower transmission capabilities.

As described in e.g. US 2002/0077110 A1, the channel switching process may also take the resources (i.e. the code power) used by a single user into consideration. In this case, if transmission resources required or used by a user reach a certain threshold, the connection is switched to a channel having a lower transmission capability, or, in the case where the higher transmission capability is requested but has not been taken into use, the connection will not be switched up to a higher transmission rate even if more bandwidth is desired. The thresholds for transmission resources used by a user may be decided e.g. based on conditions in the user's contract with the operator of the mobile communication system.

Also WO 2004004396 describes a system where cell capacity and link quality are dynamically adjusted according to the load in the cells.

In addition, there are algorithms in a mobile communication system that take the total cell load into consideration. The cell load may be measured as: the carrier power for all mobile stations using the same carrier frequency in a cell, the fraction of code tree usage, and/or the combination of the number of users and their services. For each connection (RAB), a cell load threshold must be fulfilled for the connection to be able to be switched to a channel that can provide a higher bandwidth. If the total load in the cell after the switching process would be above the cell load threshold, the connection will not be switched to the channel with the higher bandwidth. Also, if the cell load increases such that the cell becomes overloaded, a congestion control algorithm may switch down some users, especially best effort users, from a high data rate to a lower data rate such that the total cell load decreases.

By being able to use different transmission rates depending on the transmission need a better user performance is achieved, and consequently, a more optimal use of the transmission capabilities is achieved. The more optimal a system can be used, the better for the operators of the network and for the users of the mobile stations in the system. Therefore, there is always a request for better user performance and a more optimal use of the communication resources. For example, in the system described above, there will be steps in user data rate during a data transfer, if the connection changes transmission channel, steps which are not desired from an application point of view, especially if the steps are large in terms of channel bandwidth. Also, the process of switching channel affects the transmission negatively during the transmission process.

As shown above, in a mobile communication system having radio channels with different transmission capacities, there is a need for a solution achieving a better user performance and a more optimal use of the communication resources of the system.

### Definitions:

A channel bandwidth is defined as the maximum data rate of the channel, i.e. the total data rate over the channel with the data error rate (i.e. the block error rate) at zero.

The data rate is defined as the maximum data rate, or channel bandwidth, subtracted with any overhead information and with a coefficient dependent of the data error rate.

### SUMMARY OF THE INVENTION

An object of the present invention is to provide a high user performance to a user of a mobile station and at the same time a high usage of the communication resources in a communication system that provides transmission channels offering different channel bandwidths.

The above object is achieved by a method, a communication node and a computer program product set forth in the characterizing part of the independent claims.

The above mentioned object is achieved by dynamically selecting a channel bandwidth and a data error rate target for a connection over which data is to be transmitted based on an analysed characteristics of data to be transmitted, wherein the characteristics indicates the transmission need, and on an analysed load of a communication resource.

According to a first aspect of the invention, a method is provided for transmitting data between a radio access network and a mobile station in a packet data communication system, wherein data is transmitted over a connection established between the radio access network and the mobile station, and wherein the connection uses a transmission channel for the data transmission, as set out in the appended claims.

According to a second aspect of the invention, a communication node is provided in a radio access network in a packet data communication system adapted for transmitting data between the radio access network and a mobile station in the packet data communication system. The communication node is adapted to establish a connection between the radio access network and the mobile station, and the connection is adapted to use a transmission channel for the data transmission, as set out in the appended claims.

According to a first advantageous embodiment of the invention, a data error rate threshold is defined, and a new channel bandwidth is not selected for the connection until the data error rate has reached the data error rate threshold and at substantially the same time the analysed load of a communication resource has reached a load threshold.

An advantage of the present invention is that it makes it possible to find combinations of channel bandwidth and data error rate for a data transmission that both improve the quality experienced by the user of a mobile station, i.e. the actual data rate, and that uses the system capacity efficiently.

Another advantage of the invention is that a connection can, by increasing the data error rate and consequently decreasing the load of the transmission channel, carry on using a certain channel bandwidth even if at a first instance a load threshold level is achieved. Thereby, the total throughput over a connection will be higher for the user compared to if the connection would have been switched to a more narrow bandwidth.

A further advantage is that some channel switching processes to lower the load of a transmission resource can be avoided by increasing the data error rate. Thereby, some system resources can be spared.

A still further advantage of the invention is that it facilitates to avoid large steps in channel bit rate by avoiding unnecessary channel switching or by switching to a new channel when a channel bit rate has decreased to a value close to the lower bandwidth offered by the new channel, due to a high data error rate.

Another advantage of the invention is that the mobile stations will be more "fairly" treated in the system, because in a situation where the carrier power becomes too high, the data error rate can be increased for every mobile station using the carrier frequency instead of switching down only some mobile stations from a high to a lower bandwidth as in prior art.

### BRIEF DESCRIPTION OF THE DRAWINGS

The invention will in the following be described in more detail with reference to enclosed drawings, wherein:
Figure 1 shows a schematic block diagram of a communication system wherein the present invention can be used;
Figure 2 shows a schematic block diagram of an embodiment of the present invention;
Figure 3 is a flow chart of a method according to the present invention;
Figure 4 shows a diagram of the actual bit rate versus a block error rate (BLER) for a connection transmitting a 5 kbyte file over different channels having different bandwidth;
Figure 5 shows another diagram of the actual bit rate versus a block error rate (BLER) for a connection transmitting a 100 kbyte file over different channels having different bandwidth;
Figure 6 depicts a diagram of the use of the capacity of a frequency versus the block error rate;
Figure 7 depicts a diagram of the actual bit rate of a connection versus the use of the capacity of a frequency; and
Figure 8 shows a schematic block diagram of a communication node according to an embodiment of the invention.

### DETAILED DESCRIPTION

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

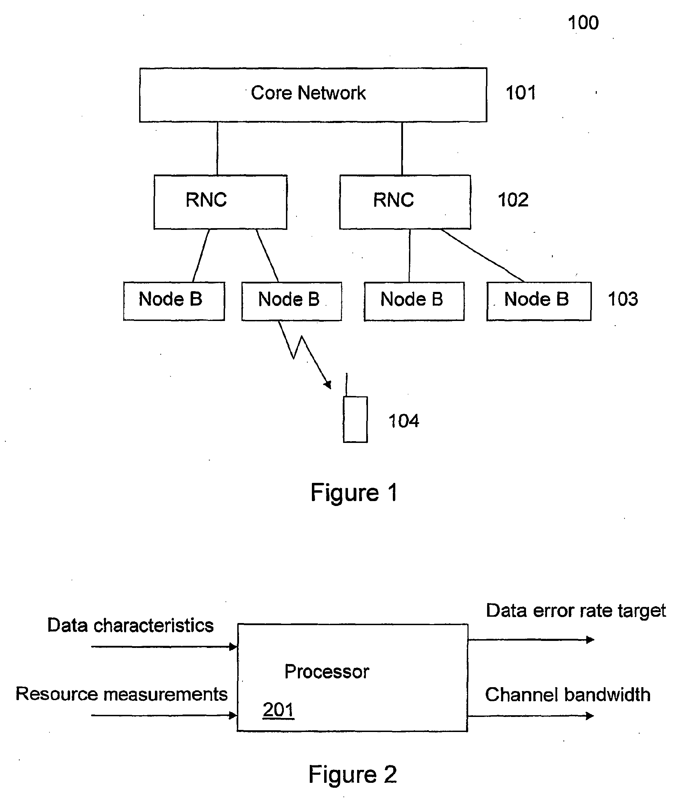

Figure 1 shows a mobile communication system wherein the present invention may be used. This mobile communication system is exemplified by a Wideband Code Division Multiple Access (W-CDMA) system 100. The W-CDMA system has a core network 101 and a radio access network, wherein the radio access network comprises one or more Radio Network Controllers (RNC) 102 used for controlling the radio access network, and one or more base stations or Node Bs 103. Each Node B provides wireless connection in a cell, covering a geographical area. All together, the radio access network provides wireless connection in a larger geographical area partitioned into such cells. When a mobile station 104 is situated in the geographical area covered by the radio access network, the mobile station will be able to connect to the W-CDMA system via a wireless channel to the Node B 103 covering the cell in which the mobile station is situated.

In a W-CDMA system, the wireless channels in a cell use a wireless carrier frequency and different spreading codes such that the wireless channels can be distinguished from each other. To improve the usability of the system for the user, various types of wireless channels are provided having different transmission capabilities such as different channel bandwidth. When transmitting data over a wireless connection using a best effort service, the connection may use different channels having different channel bandwidth between the mobile station and the base station, depending on e.g. the type of information to be transmitted and the type of subscription that a user of the mobile station has acquired. A connection can be switched between the different channels having different bandwidth. The function controlling the selection and switching between channels is called channel switching.

According to prior art, when controlling the selection of a channel used for a connection, a channel bandwidth for the connection is selected based on the transmission need, such as an amount of data to be transmitted, and on the transmission capabilities, such as transmission power.

This selection process is improved according to the solution of the invention by repeatedly during the transmission selecting the channel bandwidth and also a target for a data error rate for the data transmitted over the connection based on characteristics of the data to be transmitted and on a load of a communication resource in the communication system, indicating the current transmission capabilities. For that reason, the characteristics of the data to be transmitted and the load of a communication resource is analysed.

The term "characteristics of the data to be transmitted" represents characteristics indicative of the transmission need for the data to be transmitted, such a characteristics may relate e.g. to the amount of data to be transmitted or to the real-time criticality of the data to be transmitted. The characteristics of the data to be transmitted may be based on e.g. one or several of; file size, packet size, packet inter-arrival time, round-trip time, and/or initial (TCP) window size. The initial window size used for TCP packets is described further in "RFC 2001 - TCP Slow Start, Congestion Avoidance, Fast Retransmit, and Fast Recovery Algorithms", by W. Stevens, published as an Internet standards track protocol for the Internet community in January 1997. The characteristics of the data may also be the application or service that the data belongs to or the application protocol used. The characteristics of the data may be provided from the application, by overhearing overhead information, from quality of service information or by direct measurements of the data to be transmitted, such as by measuring a buffer load of a buffer at the transmitting side of the connection, through which buffer the data to be transmitted is passed.

The load of a communication resource in the communication system may be e.g. a load of a transmission channel used for transmitting the data (e.g. a code power), or a load of a carrier frequency used in the cell (e.g. carrier power), i.e. the total load of all channels in a cell using the same carrier power.

The solution of the invention makes it possible to find combinations of channel bandwidth and data error rate for a data transmission that both improve the quality experienced by the user of a mobile station (e.g. the actual data rate) and the system capacity, or trade user quality versus system capacity. According to simulated results, by accepting a higher data error rate for certain connections, which e.g. may experience high transmission power, a channel with a higher bandwidth can be selected without the load of the communication resource becoming too high. As a result, the throughput of data, i.e. the total amount of data that will be transmitted over the connection will be higher than if the connection would have selected a channel with a lower bandwidth, but would have experienced a lower data error rate.

It is also advantageous to limit the number of times a connection has to be switched from one channel bandwidth to another, because the process of switching must be synchronized between all the involved nodes, which process will require some system resources. According to an embodiment of the invention, the error rate target can be increased, if the use of transmission power is approaching an upper limit or threshold on either channel or carrier frequency level. When the error rate target is increased, the transmission power will be decreased such that the actual error rate becomes approximately the same as the increased error rate target. Thereby it will be possible to keep using the same channel bandwidth, and consequently a channel switching process to lower the power usage is avoided.

Especially it has been discovered that a higher data error rate may be accepted for data transmissions that comprise larger amounts of data to be transmitted, e.g. for transmitting large data files. According to one embodiment of the invention, a channel bandwidth and a data error rate target is selected based on the size of a file to be transmitted and on transmission power of a resource in the system, such as the power of the channel used for the connection (code power) or the total power on the carrier frequency used in the cell (carrier power).

According to an advantageous embodiment of the invention shown in figure 2, a selection of both a channel bandwidth and a data error rate target for the transmission is made by a processor 201 in a radio network controller 102 or in a node B 103 based on analysed characteristics of the data to be transmitted and on an analysed load of a transmission resource. As mentioned before, this makes it possible to find combinations of channel bandwidth and data error rate that results in a good user quality and in an efficient use of system capacity. It also makes it possible to avoid large steps in channel bit rate by avoiding unnecessary channel switching or by switching to a new channel when a channel bit rate has decreased, due to a high data error rate, to a value close to the lower bandwidth offered by the new channel.

According to another advantageous embodiment of the invention, the data error rate target is adjusted based on analysed code power and/or carrier power. Initially, a connection may use a first channel bandwidth and a first data error rate set by a data error rate target. When the code power for the connection increases to its maximum allowed code power, which for example may be a power value set by the user's operator, due to e.g. the mobile station moving to an area of the cell with worse radio conditions, the data error rate target, and consequently the data error rate is increased, instead of the connection being switched to a channel with lower bandwidth. In a similar manner, if the carrier power reaches a load threshold level, the data error rate will be increased for a lot of connections using the same carrier frequency. The result will in both cases be that the code power decreases, but for the user the total data rate throughput may be higher by increasing the data error rate and stick to the channel with the higher bandwidth than to switch to the channel with the lower bandwidth and maintain a low data error rate.

The data error rate and the data error rate target may be a block error rate (BLER) and a BLER target. A block comprises a number of bits. On each block, a Cyclic Redundancy Check (CRC) is performed to detect block error. In case of an error, the block has to be resent. The data error rate may also be e.g. a signal to noise ratio, a bit error rate or a frame error rate. In the same manner, the data error rate target may be a target value for any of the above. According to an embodiment of the invention, a BLER target is set, a BLER is measured and the BLER and the BLER target is used in a standard power control loop such that the power of the channel is changed to keep the BLER at the BLER target level.

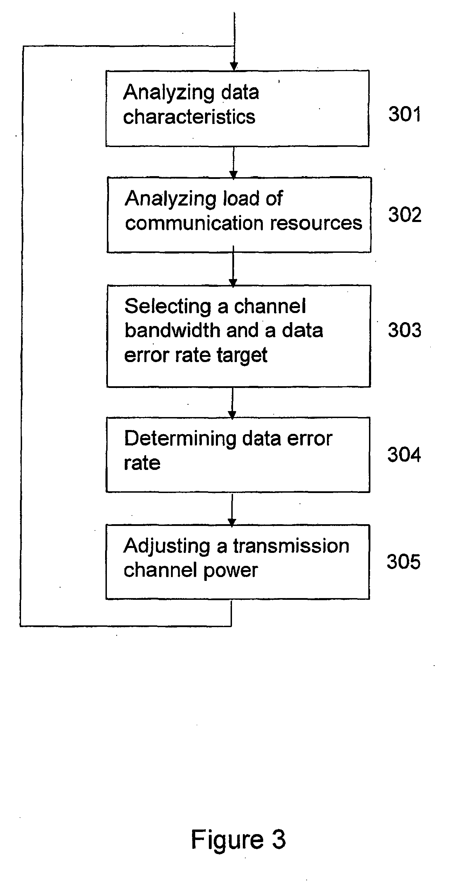

Figure 3 shows a flow chart describing a method according to an embodiment of the present invention for transmitting data over a connection established between a radio access network and a mobile station in a packet data communication system, and wherein the connection uses a transmission channel for the data transmission. The method starts by analyzing 301 a characteristics of the data to be transmitted, characteristics defining the transmission need for the connection, e.g. the amount of data to be transmitted. Then, a load of a communication resource in the communication system is analysed 302. The load of the communication resource may be e.g. a total load of a carrier frequency used in the cell where the mobile station is situated and/or a power of the transmission channel that is already in use for transmitting data over the connection (code power), if the channel is already in use. Note that the order of the analyzing steps 301 and 302 are arbitrary. I.e. the step of analyzing the load of the communication resource 302 might take place before or after or substantially simultaneously as the step of analyzing a characteristics of the data to be transmitted. Thereafter, a channel bandwidth and a data error rate target is selected 303 based on the characteristics of the data to be transmitted and on the load of the communication resource in the system. Also, during the transmission, the data error rate is determined 304 at the receiving end of the connection. This data error rate is then used, together with the selected data error rate target, to adjust 305 the power of the transmission channel used for the connection such that the data error rate is maintained at approximately the same level as the data error rate target. The steps of the method of the invention are repeated a number of times during the connection.

If the load of a communication resource is determined to reach a load threshold level, which is set to a level where the load of the communication resource is not allowed to increase anymore, a new data error rate target is selected for the connection, which new data error rate target is selected to a higher value than the previously used data error rate target. This new data error rate target may also be selected based on the characteristics of the data to be transmitted. Then, in the receiving end of the connection it will be determined 304 that the data error rate is lower than the new data error rate target, and consequently, the power of the channel used for the connection will be decreased such that the data error rate is adjusted to and is maintained at approximately the same level as the new data error rate target. This is done by outer and inner power control loops. The outer loop tries to maintain the BLER target by adjusting an Eb/No target (ratio between received power and interference). The inner loop then adjusts the power to maintain the measured Eb/No close to the Eb/No target such that when the BLER target is increased the Eb/No target may be lowered and consequently the required transmit power may be lowered. Thereby, the load of the communication resource is lowered below the load threshold level. If the total load of the cell reaches its load threshold level, a new higher data error rate target may be selected for all connections of that carrier frequency, or only for the connections using channels with a highest possible bandwidth, or alternatively for the connections using the highest transmission power. In the same manner, since the transmission power of these channels will be decreased to adjust the data error rate to the new data error rate target, the total load of the carrier frequency will decrease and settle on a level below the load threshold level.

If the load of the communication resource reaches the load threshold level, and at the same time the data error rate target, and consequently the data error rate, is at an error rate threshold level, a new channel bandwidth more narrow than the presently used channel bandwidth is selected for the data transmission over the connection. When selecting a new channel bandwidth, the connection may be switched from a first transmission channel offering the presently used bandwidth to a second transmission channel offering the new narrower channel bandwidth. The error rate threshold level is selected such that the data error rate cannot be increased anymore without the data transmission significantly losing capacity or service quality. As will be described further down in this document, according to an embodiment of the invention, this error rate threshold level is selected dependent on the characteristics of the data to be transmitted. For example, the larger a size of a file to be transmitted is, the higher error rate threshold level can be selected. According to another embodiment of the invention, a fixed error rate threshold level is used. According to simulations, a good value for a fixed BLER threshold would be 10 %.

The method described above has been described for the case when the load of a communication resource reaches an upper threshold level. In a similar way, this method may be used when the load of a communication resource reaches a lower threshold level. In this case, the method may instruct the system to switch to a channel with a higher bandwidth and perhaps to use a data error rate that is higher than the presently used bandwidth. Alternatively, the method may instruct the system to carry on using the present bandwidth but to use a lower data error rate.

Preferably, the data error rate is a Block Error Rate (BLER) of transmitted blocks of data. Similarly, the data error rate target is a Block Error Rate target.

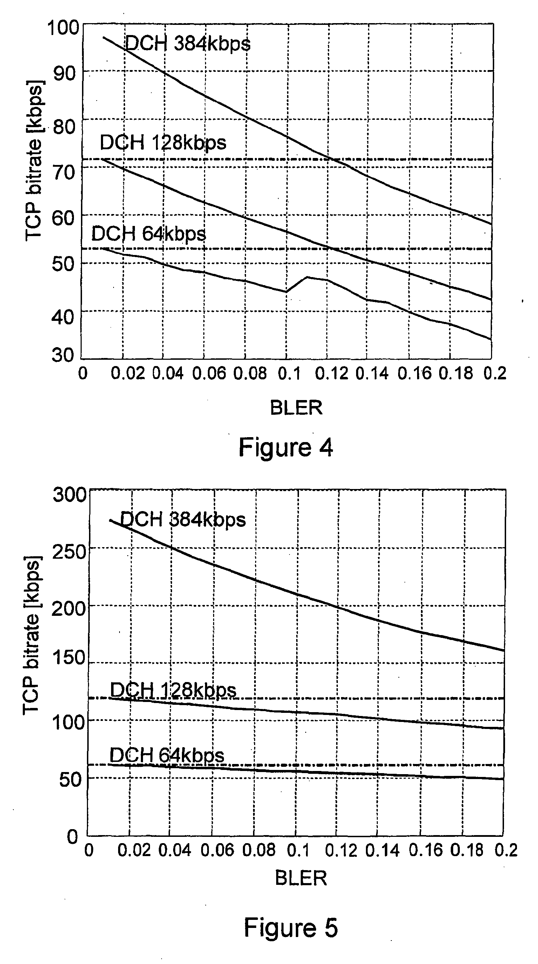

As mentioned above, the characteristics of the data to be transmitted used for selecting data error rate target and for selecting channel bandwidth, may be a value dependent on the size of a file to be transmitted. The diagrams of figures 4 and 5 show two use cases, wherein the actual Transport Control Protocol (TCP) bit rate as experienced by a user as a function of the Block Error Rate is depicted. In figure 4, the bit rate as a function of the BLER is shown for a file to be transmitted with a size of 5 kbyte, whereas in figure 5 the file to be transmitted has a size of 100 kbyte. In both figures, the unbroken lines show the TCP bit rate for three channels, wherein a first channel has a bandwidth of 384 kbps, a second channel a bandwidth of 128 kbps and a third channel a bandwidth of 64 kbps. The broken lines mark the 1 % BLER level for the second channel and the third channel.

As can be seen in figure 4, wherein a file size of 5 kbyte is transmitted, a radio channel with 384 kbps bandwidth can have up to 12 % BLER and still offer a better user quality (i.e. a higher TCP bit rate) than a channel with 128 kbps bandwidth with 1 % BLER. The same also applies to the relation between the channels having 128 kbps and 64 kbps bandwidth.

In the example of figure 5, the file size is 100 kbyte. In this diagram it can be seen that the 384kbps channel can even have a BLER of 20 % and still be offering the user a higher bit rate than if the connection would have been switched to the 128 kbps channel. The same also applies to the relation between the channels having 128 kbps and 64 kbps bandwidth.

The difference between the resulting quality for 5 and 100kbyte file transfer is caused by the TCP slow start algorithm. The TCP algorithm segments a data stream into TCP segments up to the Maximum Segment Size (MSS). At the beginning of a TCP connection, TCP starts with an initial number of segments according to an initial window size. For each acknowledgment the send window size is increased, which means that TCP can have more and more unacknowledged segments outstanding. In other words, the limited send window at the beginning of the TCP connection prohibits to fully utilize high data rate connections. As a result, the smaller the size of the file to transmit, the larger relative impact of the TCP slow start performance.

The diagrams of figures 4 and 5 show that a dynamically variable BLER and BLER target would be advantageous for the experienced user quality. Comparing figure 4 and 5 show that setting the error rate threshold depending on the load characteristics, such as file size, can also improve the user quality.

Figures 4 and 5 are only examples that show the characteristics of one type of application (File Download using TCP). Other application protocols and services will have different behaviour requiring other BLER target/ bandwidth combinations. Also with TCP the best combined selection may depend on other parameters than the file size only, for example, MSS, round trip time and initial window size.

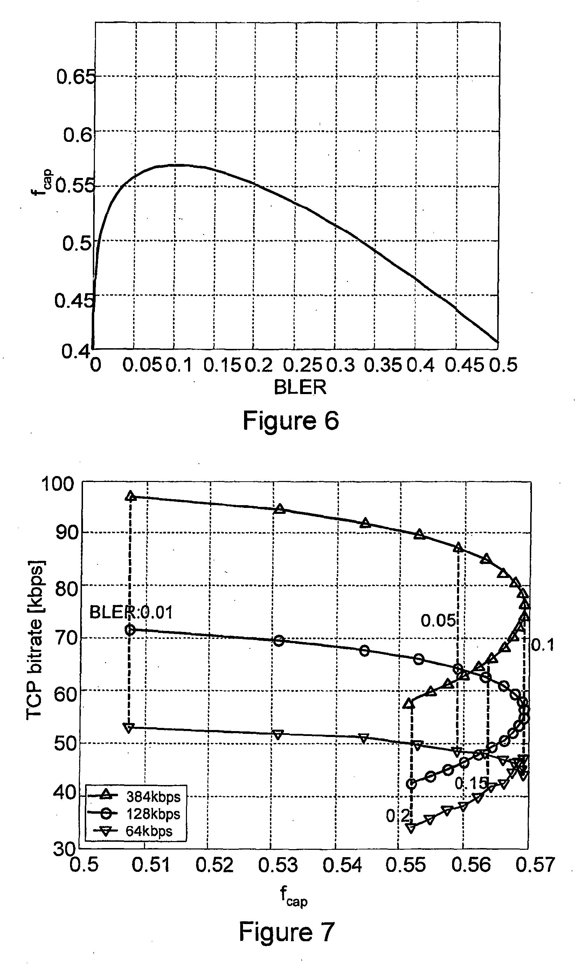

The principle can also be applied to groups of users (or mobile stations) sharing a common resource, for example the carrier power in a cell. By increasing the BLER target for all users (or some users) in the cell, when the carrier power approaches its load threshold level, the use of the capacity in the cell can be increased. This is shown in the diagram of figure 6, which shows the use of the total capacity resource (f_{cap}) as a function of the BLER, when the same BLER would be used for all users. The degrading of TCP bit rate due to increased BLER is assumed to be compensated by an increase in the number of TCP users that can be served in the cell. As can be seen, the maximum capacity use would be at around 10 % BLER, which is at a level of about 12 % more capacity than if a constant BLER target of 1 % would be used.

Figure 7 shows a diagram of the TCP bit rate (i.e. the quality experience by a user) as a function of the capacity use. This diagram shows the case when a 5 kbyte file is transmitted or received by all users in the cell. In this case, the same BLER is assumed for all users in the cell. When the load in the cell is high (e.g. high carrier power) the BLER target is increased. The increased BLER target and consequently the increased BLER increases the capacity use. Also, even if the user quality in terms of throughput decreases when BLER increases, if the lower BLER would have been maintained, a switch to a channel with lower bandwidth would have been necessary, and, compared to this solution the user throughput will be higher with an increased BLER. When the load in the cell is low, a low BLER target can be used. This decreases the possible capacity use of the system, but increases the user throughput. As can be seen from the figure, the capacity gain is small above 5 % BLER. On the other hand, to switch from 5 % 384 kbps bandwidth down to 1 % 128 kbps results in both a TCP bit rate loss and a capacity loss. Even though this increases the number of users that simultaneously can transmit a packet, it decreases the cell throughout. From a pure capacity and user bit rate point of view, as can be seen from the figure, channel switching should operate in the range of 5-15 % BLER.

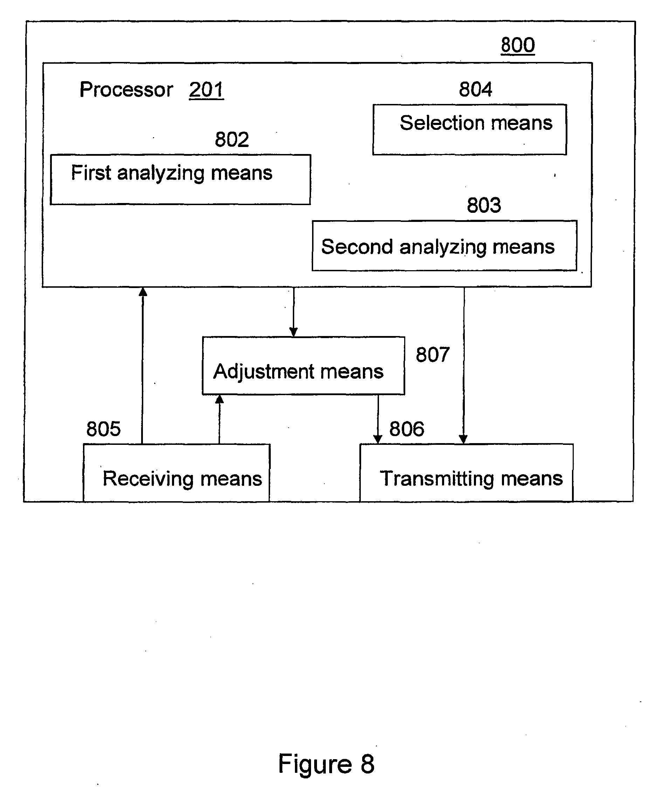

Figure 8 shows a functional block diagram of a communication node according to an embodiment of the present invention. For a W-CDMA system, the communication node wherein the present invention is implemented may be e.g. a node B or an RNC.

The communication node 800 comprises a processor 201, which has a first analyzing means 802 adapted for analyzing characteristics of the data to be transmitted, a second analyzing means 803 adapted for analyzing a load of a communication resource in the communication system and a selection means 804 adapted for selecting a channel bandwidth and a data error rate target for the data transmission based on the characteristics of the data to be transmitted and on the load of the communication resource in the communication system.

The node also has a receiving means 805 adapted to receive information regarding characteristics of the data to be transmitted. This information indicates the requested bandwidth for the transmission, such as the size of a file to be transmitted. The receiving means is also adapted to receive information regarding the load of a communication resource in the system, such as the load of a channel used for a certain connection or the load of a carrier frequency in the cell in which the mobile station is situated. The receiving means may also be adapted to receive information regarding the data error rate at the receiving end of the connection. In addition, the node has a transmitting means 806, which may be used e.g. to transmit the data error rate target to the mobile station. The node may also have an adjustment means 807 adapted to adjust a power of the transmission channel based on the actual data error rate and on the selected data error rate.

When the communication node described above is in use, the following process would take place when transmitting data uplink, i.e. from the mobile station to the radio access network: The mobile station would measure information indicative of the characteristics of the data that is to be transmitted and send this information to the receiving means 805 in the communication node. The receiving means would pass this information to the first analyzing means 802, wherein the information is used to analyze the characteristics of the data to be transmitted. Information regarding the channel load is received either directly in the receiving means 805 by measuring the channel load in the node or indirectly via measurements in the mobile station. This information is passed from the receiving means 805 to the second analyzing means 803, wherein it is used to analyze the channel load. Information regarding the carrier frequency load is received in the receiving means in the node and also passed to the second analyzing means 803, wherein it is used to analyze the carrier frequency load. The characteristics of the data to be transmitted and the channel load and/or the carrier frequency load is passed to the selection means 804 wherein it is used to select a channel bandwidth and a data error rate target for the connection. The data error rate target is communicated to the adjustment means 807. When data is received in the receiving means 805, the data error rate is determined e.g. at the receiving means and passed to the adjustment means wherein the data error rate is compared to the data error rate target. The adjustment means 807 is adapted to use this comparison to determine a level of the power of the transmission channel that would maintain the data error rate at a level approximately similar to the selected data error rate target. This determined power level is then communicated via the transmission means 806 to the mobile station. Henceforth, until further instructions are received, the mobile station will use this determined power level for transmitting the remaining data. The steps described above are repeated during the transmission.

The following process would take place when transmitting data downlink, i.e. from the radio access network to the mobile station according to the embodiment of the invention shown in figure 8: The communication node would in a buffer (not shown) receive the data to be transmitted from the core network, perhaps via another node in the radio access network. According to one embodiment, the load of the buffer would be measured by a measurement means (not shown) in the node, and passed to the first analyzing means 802 wherein the characteristics of the data will be analyzed based on the measured load of the buffer. Also, information regarding the channel load is received either directly in the receiving means 805 in the node or indirectly via measurements in the mobile station. This information is passed from the receiving means 805 to the second analyzing means 803, wherein it is used to analyze the channel load. Information of the carrier frequency load is received in the receiving means in the node and also passed to the second analyzing means 803, wherein it is used to analyze the carrier frequency load. The characteristics of the data to be transmitted and the channel load and/or the carrier frequency load is passed to the selection means 804 wherein it is used to select a channel bandwidth and a data error rate target for the connection. The data error rate target is transmitted via the transmitting means 806 to the mobile station, and the mobile station is instructed by the node to measure an actual data error rate and to compare the actual data error rare to the data error rate target. The result is used to calculate a suitable transmission power level such that the data error rate is kept at the data error rate target. The calculated transmission power level is communicated to the communication node. This power level is received in the receiving means 805 and communicated to the adjustment means 807 to adjust the transmission power. Until further instructions are received, the node will use this adjusted power level for transmitting the remaining data. The steps described above are repeated during the transmission.

According to an embodiment of the invention, there may also be load threshold values and an error rate threshold value stored in the selection means 804. When selecting channel bandwidth and data error rate target for the data transmission, the selection means is also adapted to compare the determined load value or values to the load threshold values and to take the result of this comparison in consideration when selecting data error rate target and channel bandwidth. Also, the selection means is adapted to take the error rate threshold value in consideration when selecting data error rate and channel bandwidth. The error rate threshold value is set to a value which would be appropriate for switching channel in terms of user quality and system capacity. In an embodiment, the error rate threshold value is a fixed value, which may be set to approximately 10 %. In another embodiment, the error rate threshold value is a dynamic value, set dependent on the characteristics of the data to be transmitted, for example on the size of a file to be transmitted.

As mentioned above, the characteristics of the data to be transmitted, which is determined and used in the invention is, according to an embodiment of the invention, based on the amount of data to be transmitted, such as the size of a file to be transmitted. Since it may be impractical for the system to determine the size of a file, measurements on the Radio Link Control (RLC) layer such as a load of a buffer at the transmitting side of the connection, have to be used. Such a value could be obtained by during the transmission measure the load of the buffer situated at the transmitting side of the connection, in which buffer data to be transmitted is stored before it is transmitted. Since it may be difficult to identify the file size in advance of the data transmission, especially if the buffer size measurement method is used, a short file size may be initially assumed, and an "expected file size" parameter will be increased based on measured buffer load on the transmitting side of the connection, when the file transfer continues.

Information about the characteristics of data to be transmitted may also be obtained via a message from the sender of the data, for example in the header of a message comprising the data or in a separate message. Information about the characteristic of data to be transmitted can in some cases be provided directly or indirectly from the application, the quality of service information and/or the subscriber information.

According to an alternative embodiment of the invention, the characteristics of the data to be transmitted may be e.g. information regarding the real-time criticality of the data to be transmitted. Such information could be obtained e.g. via a message from the sender of the data.

The total load of the carrier frequency may be determined e.g. based on the fraction of code tree usage (i.e. the number of orthogonal CDMA-codes used as a fraction of the total number of existing orthogonal CDMA-codes for the frequency), based on the fraction total available bandwidth used, based on the number of mobile terminals in the cell using this carrier frequency taking their service used into account or based on a determined carrier power of the cell. If the total load of the carrier frequency is determined based on the number of mobile terminals using this carrier frequency, a service cost weight may be applied to each terminal representing the load factor of the service, and the total load is determined by summing the weight for all terminals.

As described in this document, by making it possible to dynamically select a data error rate and a channel with a certain channel bandwidth for a data transmission based on data characteristics, such as file size, and on the load of a communication resource, the capacity of the system is increased, and at the same time the throughput over a connection is increased. By those measures, a connection can, by increasing the data error rate and consequently decreasing the load of the transmission channel, carry on using a certain channel bandwidth even if at a first instance a load threshold level is achieved. Thereby, the total throughput over a connection will be higher for the user compared to if the connection would have been switched to a more narrow bandwidth.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A method for transmitting data between a radio access network and a mobile station in a packet data communication system, wherein data is transmitted over a connection established between the radio access network and the mobile station, wherein the connection uses a transmission channel for the data transmission, **characterized in that** the method comprises dynamically selecting a channel bandwidth and a data error rate target for the connection by during the transmission repeatedly:
analyzing (301) characteristics of the data to be transmitted using a measure of a buffer load at a transmitting side of the connection, through which buffer data to be transmitted is passed;
analyzing (302) a load of a communication resource in the communication system; and
selecting (303) a channel bandwidth and a data error rate target for the data transmission based on the characteristics of the data to be transmitted and on the load of the communication resource in the communication system.

2. A method according to claim 1, wherein analyzing (302) the load of the communication resource in the communication system comprises analyzing a load of the transmission channel used for transmitting data.

3. A method according to claim 1 or 2, wherein the step of selecting (303) further comprises selecting a new data error rate target different from a presently used data error rate target, if the load of a communication resource in the communication system reaches a load threshold level.

4. A method according to claim 1 or 2, wherein the step of selecting (303) further comprises selecting a new data error rate target, which is higher than a presently used data error rate target, if the load of a communication resource in the communication system reaches a load threshold level.

5. A method according to claim 3 or 4, wherein, if the load of the communication resource reaches the load threshold level, and also the new data error rate target is at an error rate threshold level, set such that if the error rate threshold level is passed the data transmission efficiency of the system would decrease, a new channel bandwidth different to a presently used channel bandwidth is selected for the data transmission over the connection.

6. A method according to claim 5, wherein the error rate threshold level is set based on the characteristics of the data to be transmitted.

7. A method according to claim 5, wherein the error rate threshold level is set at a value of approximately 10 % data error rate.

8. A method according to any of claims 1-7, wherein the characteristics of the data to be transmitted is based on one or several of the following parameters: a size of a file to be transmitted, a data packet size, a data packet inter-arrival time, a round-trip time, and an initial window size.

9. A method according to any of claims 1-8, wherein the data error rate is a Block Error Rate (BLER) of transmitted data blocks.

10. A method according to any of claims 1-9, wherein analyzing (302) the load of the communication resource in the communication system comprises analyzing a total load of a carrier frequency used in a cell where the mobile station is situated.

11. A method according to claim 10, wherein the total load of the carrier frequency in the cell is analysed based on a carrier power of the cell.

12. A method according to claim 10, wherein the total load of the carrier frequency in the cell is analysed based on the number of mobile stations using the carrier frequency in the cell.

13. A method according to any of claims 1-12 wherein the data is transmitted from the radio access network to the mobile station.

14. A method according to any of claims 1-12, wherein the data is transmitted from the mobile station to the radio access network.

15. A method according to any of claims 1-14, wherein the method further comprises the steps of repeatedly:
determining (304) a data error rate at a receiving end of the connection, and
adjusting (305) a power of the transmission channel of the connection based on the determined data error rate and the selected data error rate target, such that the data error rate will be maintained at a level approximately similar to the selected data error rate target.

16. A communication node (800) in a radio access network in a packet data communication system adapted for transmitting data between the radio access network and a mobile station in the packet data communication system, wherein the communication node is adapted to establish a connection between the radio access network and the mobile station, and wherein the connection uses a transmission channel for the data transmission, **characterized by** the communication node (800) comprising:
first analyzing means (802) adapted to repeatedly analyze characteristics of the data to be transmitted using a measure of a buffer load at a transmitting side of the connection, through which buffer data to be transmitted is passed;
second analyzing means (803) adapted to repeatedly analyze a load of a communication resource in the communication system; and
selection means (804) adapted to repeatedly select a channel bandwidth and a data error rate target for the data transmission based on the characteristics of the data to be transmitted and on the load of the communication resource in the communication system.

17. A communication node according to claim 16, wherein the node is a Node B.

18. A communication node according to claim 16, wherein the node is a Radio Network Controller (RNC).

19. A communication node according to any of claims 16-18, wherein the second analyzing means (803) is adapted to analyze a load of the transmission channel used for transmitting data.

20. A communication node according to any of claims 16-19, wherein the selection means (804) is adapted to select a new data error rate target different from a presently used data error rate target, if the load of a communication resource in the communication system has reached a load threshold level.

21. A communication node according to claim 20, wherein, if the load of a communication resource has reached the load threshold level, and also the new data error rate target is at an error rate threshold level, set such that if the error rate threshold level is passed the data transmission efficiency of the system would decrease, the selection means (804) is adapted to select a new channel bandwidth different to a presently used channel bandwidth for the data transmission over the connection.

22. A communication node according to any of claims 16-21, wherein the first analyzing means (802) is adapted to analyze the characteristics of the data to be transmitted based on one or several of the following parameters: a size of a file to be transmitted, a data packet size, a data packet inter-arrival time, a round-trip time, and an initial window size.

23. A communication node according to any of claims 16-22, wherein the data error rate is a Block Error Rate (BLER) of transmitted data blocks.

24. A communication node according to any of claims 16-23, wherein the second analyzing means (803) is adapted to analyze a total load of a carrier frequency used in a cell where the mobile station is situated.

25. A communication node according to claim 24, wherein the total load of the carrier frequency in the cell is analysed based on a carrier power of the cell.

26. A communication node according to claim 24, wherein the total load of the carrier frequency in the cell is analysed based on the number of mobile stations using the carrier frequency in the cell.

27. A communication node according to any of claims 16-26, further comprising:
a determining means adapted to determine a data error rate for transmitted data, and
an adjustment means (807) adapted to adjust a power of the transmission channel of the connection based on the determined data error rate and the selected data error rate target, such that the data error rate will be maintained at a level approximately similar to the selected data error rate target.

28. A computer program product loadable into a memory of a digital computer device residing in a communication node, wherein the computer program product comprises software code portions for performing the method of any of claims 1-15 when the computer program product is run on the computer device.

## Patentansprüche

1. Verfahren zum Übertragen von Daten zwischen einem Funkzugangsnetz und einer Mobilstation in einem Paketdatenkommunikationssystem, wobei Daten über eine zwischen dem Funkzugangsnetz und der Mobilstation hergestellte Verbindung übertragen werden, wobei die Verbindung einen Übertragungskanal für die Datenübertragung verwendet, **dadurch gekennzeichnet, dass** das Verfahren das dynamische Wählen einer Kanalbandbreite und eines Datenfehlerratenziels für die Verbindung umfasst durch Wiederholen während der Übertragung von:
Analysieren (301) von Charakteristika der zu übertragenden Daten unter Verwendung eines Maßes einer Pufferlast auf einer übertragenden Seite der Verbindung, durch die zu übertragende Pufferdaten geschickt werden;
Analysieren (302) einer Last einer Kommunikationsressource in dem Kommunikationssystem und Wählen (303) einer Kanalbandbreite und eines Datenfehlerratenziels für die Datenübertragung auf der Basis der Charakteristika der zu übertragenden Daten und der Last der Kommunikationsressource in dem Kommunikationssystem.

2. Verfahren nach Anspruch 1, wobei das Analysieren (302) der Last der Kommunikationsressource in dem Kommunikationssystem das Analysieren einer Last des zum Übertragen von Daten verwendeten Übertragungskanals umfasst.

3. Verfahren nach Anspruch 1 oder 2, wobei der Schritt des Wählens (303) weiterhin das Wählen eines von einem gegenwärtig verwendeten Datenfehlerratenziel verschiedenen neuen Datenfehlerratenziel umfasst, falls die Last einer Kommunikationsressource in dem Kommunikationssystem einen Lastschwellwertpegel erreicht.

4. Verfahren nach Anspruch 1 oder 2, wobei der Schritt des Wählens (303) weiterhin das Wählen eines neuen Datenfehlerratenziels umfasst, das über einen gegenwärtig verwendeten Datenfehlerratenziel liegt, falls die Last einer Kommunikationsressource in dem Kommunikationssystem einen Lastschwellwertpegel erreicht.

5. Verfahren nach Anspruch 3 oder 4, wobei, falls die Last der Kommunikationsressource den Lastschwellwertpegel erreicht und auch das neue Datenfehlerratenziel auf einem Fehlerratenschwellwertpegel ist, derart eingestellt, dass, falls der Fehlerratenschwellwertpegel passiert ist, die Datenübertragungseffizienz des Systems abnehmen würde, eine von einer gegenwärtig verwendeten Kanalbandbreite verschiedene neue Kanalbandbreite für die Datenübertragung über die Verbindung gewählt wird.

6. Verfahren nach Anspruch 5, wobei der Fehlerratenschwellwertpegel auf der Basis der Charakteristika der zu übertragenden Daten eingestellt wird.

7. Verfahren nach Anspruch 5, wobei der Fehlerratenschwellwertpegel auf einen Wert von etwa 10% Datenfehlerrate eingestellt wird.

8. Verfahren nach einem der Ansprüche 1-7, wobei die Charakteristika der zu übertragenden Daten auf einen oder mehreren der folgenden Parameter basieren: einer Größe einer zu übertragenden Datei, einer Datenpaketgröße, einer Datenpaketzwischenankunftszeit, einer Antwortzeit und einer anfänglichen Fenstergröße.

9. Verfahren nach einem der Ansprüche 1-8, wobei die Datenfehlerrate eine Blockfehlerrate (BLER - Block Error Rate) von übertragenen Datenblöcken ist.

10. Verfahren nach einem der Ansprüche 1-9, wobei das Analysieren (302) der Last der Kommunikationsressource in dem Kommunikationssystem das Analysieren einer Gesamtlast einer Trägerfrequenz umfasst, die in einer Zelle verwendet wird, wo sich die Mobilstation befindet.

11. Verfahren nach Anspruch 10, wobei die Gesamtlast der Trägerfrequenz in der Zelle auf der Basis einer Trägerleistung der Zelle analysiert wird.

12. Verfahren nach Anspruch 10, wobei die Gesamtlast der Trägerfrequenz in der Zelle auf der Basis der Anzahl von Mobilstationen, die die Trägerfrequenz in der Zelle verwenden, analysiert wird.

13. Verfahren nach einem der Ansprüche 1-12, wobei die Daten von dem Funkzugangsnetz zur Mobilstation übertragen werden.

14. Verfahren nach einem der Ansprüche 1-12, wobei die Daten von der Mobilstation zum Funkzugangsnetz übertragen werden.

15. Verfahren nach einem der Ansprüche 1-14, wobei das Verfahren weiterhin das Wiederholen der folgenden Schritte umfasst:
Bestimmen (304) einer Datenfehlerrate an einem empfangenden Ende der Verbindung und
Verstellen (305) einer Leistung des Übertragungskanals der Verbindung auf der Basis der bestimmten Datenfehlerrate und dem gewählten Datenfehlerratenziel, so dass die Datenfehlerrate auf einem Pegel gehalten wird, der etwa gleich dem gewählten Datenfehlerratenziel ist.

16. Kommunikationsknoten (800) in einem Funkzugangsnetz in einem Paketdatenkommunikationssystem, ausgelegt zum Übertragen von Daten zwischen dem Funkzugangsnetz und einer Mobilstation in dem Paketdatenkommunikationssystem, wobei der Kommunikationsknoten ausgelegt ist zum Herstellen einer Verbindung zwischen dem Funkzugangsnetz und der Mobilstation und wobei die Verbindung einen Übertragungskanal für die Datenübertragung verwendet, **dadurch gekennzeichnet, dass** der Kommunikationsknoten (800) Folgendes umfasst:
erstes Analysiermittel (802), ausgelegt zum wiederholten Analysieren von Charakteristika der zu übertragenden Daten unter Verwendung eines Maßes einer Pufferlast auf einer übertragenden Seite der Verbindung, durch die die zu übertragenden Pufferdaten geschickt werden;
ein zweites Analysiermittel (803), ausgelegt zum wiederholten Analysieren einer Last einer Kommunikationsressource in dem Kommunikationssystem; und
ein Wählmittel (804), ausgelegt zum wiederholten Wählen einer Kanalbandbreite und eines Datenfehlerratenziels für die Datenübertragung auf der Basis der Charakteristika der zu übertragenden Daten und der Last der Kommunikationsressource im Kommunikationssystem.

17. Kommunikationsknoten nach Anspruch 16, wobei der Knoten ein Node B ist.

18. Kommunikationsknoten nach Anspruch 16, wobei der Knoten ein Radio Network Controller (RNC) ist.

19. Kommunikationsknoten nach einem der Ansprüche 16-18, wobei das zweite Analysiermittel (803) ausgelegt ist zum Analysieren einer Last des zum Übertragen von Daten verwendeten Übertragungskanals.

20. Kommunikationsknoten nach einem der Ansprüche 16-19, wobei das Wählmittel (804) ausgelegt ist zum Wählen eines von einem gegenwärtig verwendeten Datenfehlerratenziels verschiedenen neuen Datenfehlerratenziel, falls die Last einer Kommunikationsressource in dem Kommunikationssystem einen Lastschwellwertpegel erreicht hat.

21. Kommunikationsknoten nach Anspruch 20, wobei, falls die Last einer Kommunikationsressource den Lastschwellwertpegel erreicht und auch das neue Datenfehlerratenziel auf einem Fehlerratenschwellwertpegel ist, derart eingestellt, dass, falls der Fehlerratenschwellwertpegel passiert ist, die Datenübertragungseffizienz des Systems abnehmen würde, das Wählmittel (804) ausgelegt ist zum Wählen einer von einer gegenwärtig verwendeten Kanalbandbreite für die Datenübertragung über die Verbindung verschiedenen neuen Kanalbandbreite.

22. Kommunikationsknoten nach einem der Ansprüche 16-21, wobei das erste Analysiermittel (802) ausgelegt ist zum Analysieren der Charakteristika der zu übertragenden Daten auf der Basis eines oder mehrerer der folgenden Parameter: einer Größe einer zu übertragenden Datei, einer Datenpaketgröße, einer Datenpaketzwischenankunftszeit, einer Antwortzeit und einer anfänglichen Fenstergröße.

23. Kommunikationsknoten nach einem der Ansprüche 16-22, wobei die Datenfehlerrate eine Blockfehlerrate (BLER - Block Error Rate) von übertragenen Datenblöcken ist.

24. Kommunikationsknoten nach einem der Ansprüche 16-23, wobei das zweite Analysiermittel (803) ausgelegt ist zum Analysieren einer Gesamtlast einer Trägerfrequenz, die in einer Zelle verwendet wird, wo sich die Mobilstation befindet.

25. Kommunikationsknoten nach Anspruch 24, wobei die Gesamtlast der Trägerfrequenz in der Zelle auf der Basis einer Trägerleistung der Zelle analysiert wird.

26. Kommunikationsknoten nach Anspruch 24, wobei die Gesamtlast der Trägerfrequenz in der Zelle auf der Basis der Anzahl von Mobilstationen, die die Trägerfrequenz in der Zelle verwenden, analysiert wird.

27. Kommunikationsknoten nach einem der Ansprüche 16-26, weiterhin umfassend:
ein Bestimmungsmittel, ausgelegt zum Bestimmen einer Datenfehlerrate für übertragene Daten und
ein Verstellmittel (807), ausgelegt zum Verstellen einer Leistung des Übertragungskanals der Verbindung auf der Basis der bestimmten Datenfehlerrate und dem gewählten Datenfehlerratenziel, so dass die Datenfehlerrate auf einem Pegel gehalten wird, der etwa gleich dem gewählten Datenfehlerratenziel ist.

28. Computerprogrammprodukt, das in einen Speicher einer Digitalcomputereinrichtung geladen werden kann, die sich in einem Kommunikationsknoten befindet, wobei das Computerprogrammprodukt Softwarecodeabschnitte zum Ausführen des Verfahrens nach einem der Ansprüche 1-15 umfasst, wenn das Computerprogrammprodukt auf der Computereinrichtung läuft.

## Revendications

1. Procédé pour transmettre des données entre un réseau d'accès radio et une station mobile dans un système de communication de données par paquets, dans lequel des données sont transmises sur une connexion établie entre le réseau d'accès radio et la station mobile, dans lequel la connexion utilise un canal de transmission pour la transmission de données, **caractérisé en ce que** le procédé comprend la sélection dynamique d'une largeur de bande de canal et d'une cible de taux d'erreur de données pour la connexion durant la transmission en effectuant de façon répétée :
l'analyse (301) de caractéristiques des données à transmettre en utilisant une mesure d'une charge tampon sur un côté transmission de la connexion, à travers laquelle passent des données tampon à transmettre ;
l'analyse (302) d'une charge d'une ressource de communication dans le système de communication ; et
la sélection (303) d'une largeur de bande de canal et d'une cible de taux d'erreur de données pour la transmission de données sur la base des caractéristiques des données à transmettre et sur la charge de la ressource de communication dans le système de communication.

2. Procédé selon la revendication 1, dans lequel l'analyse (302) de la charge de la ressource de communication dans le système de communication comprend l'analyse d'une charge du canal de transmission utilisé pour transmettre des données.

3. Procédé selon la revendication 1 ou 2, dans lequel l'étape de sélection (303) comprend en outre la sélection d'une nouvelle cible de taux d'erreur de données différente d'une cible de taux d'erreur de données actuellement utilisée, si la charge d'une ressource de communication dans le système de communication atteint un niveau de seuil de charge.

4. Procédé selon la revendication 1 ou 2, dans lequel l'étape de sélection (303) comprend en outre la sélection d'une nouvelle cible de taux d'erreur de données, qui est supérieure à une cible de taux d'erreur de données actuellement utilisée, si la charge d'une ressource de communication dans le système de communication atteint un niveau de seuil de charge.

5. Procédé selon la revendication 3 ou 4, dans lequel, si la charge de la ressource de communication atteint un niveau de seuil de charge et de plus la nouvelle cible de taux d'erreur de données est à un niveau de seuil de taux d'erreur fixé de manière que, si le niveau de seuil de taux d'erreur était dépassé, le rendement de transmission de données du système diminuerait, une nouvelle largeur de bande de canal différente d'une largeur de bande de canal actuellement utilisée est sélectionnée pour la transmission de données sur la connexion.

6. Procédé selon la revendication 5, dans lequel le niveau de seuil de taux d'erreur est fixé sur la base des caractéristiques des données à transmettre.

7. Procédé selon la revendication 5, dans lequel le niveau de seuil de taux d'erreur est fixé à une valeur de taux d'erreur de données d'environ 10%.

8. Procédé selon l'une quelconque des revendications 1 à 7, dans lequel les caractéristiques des données à transmettre sont basées sur un ou plusieurs des paramètres suivants : une taille d'un fichier à transmettre, une taille de paquet de données, un temps inter-arrivée de paquet de données, un temps d'aller-retour et une taille de fenêtre initiale.

9. Procédé selon l'une quelconque des revendications 1 à 8, dans lequel le taux d'erreur de données est un taux d'erreur de bloc (BLER) de blocs de données transmis.

10. Procédé selon l'une quelconque des revendications 1 à 9, dans lequel l'analyse (302) de la charge de la ressource de communication dans le système de communication comprend l'analyse d'une charge totale d'une fréquence porteuse utilisée dans une cellule dans laquelle la station mobile est située.

11. Procédé selon la revendication 10, dans lequel la charge totale de la fréquence porteuse dans la cellule est analysée sur la base d'une puissance de la porteuse de la cellule.

12. Procédé selon la revendication 10, dans lequel la charge totale de la fréquence porteuse dans la cellule est analysée sur la base du nombre de stations mobiles utilisant la fréquence porteuse dans la cellule.

13. Procédé selon l'une quelconque des revendications 1 à 12, dans lequel les données sont transmises du réseau d'accès radio à la station mobile.

14. Procédé selon l'une quelconque des revendications 1 à 12, dans lequel les données sont transmises de la station mobile au réseau d'accès radio.

15. Procédé selon l'une quelconque des revendications 1 à 14, dans lequel le procédé comprend en outre les étapes consistant à effectuer de façon répétée :
la détermination (304) d'un taux d'erreur de données à une extrémité réceptrice de la connexion, et
le réglage (305) d'une puissance du canal de transmission de la connexion sur la base du taux d'erreur de données déterminé et de la cible de taux d'erreur de données sélectionnée, de telle manière que le taux d'erreur de données sera maintenu à un niveau approximativement similaire à la cible de taux d'erreur de données sélectionnée.

16. Noeud de communication (800) dans un réseau d'accès radio dans un système de communication de données par paquets adapté pour transmettre des données entre le réseau d'accès radio et une station mobile dans le système de communication de données par paquets, dans lequel le noeud de communication est adapté pour établir une connexion entre le réseau d'accès radio et la station mobile, et dans lequel la connexion utilise un canal de transmission pour la transmission de données, **caractérisé en ce que** le noeud de communication (800) comprend :
des premiers moyens d'analyse (802) adaptés pour analyser de façon répétée des caractéristiques des données à transmettre en utilisant une mesure d'une charge tampon sur un côté transmission de la connexion, à travers laquelle passent des données tampon à transmettre ;
des deuxièmes moyens d'analyse (803) adaptés pour analyser de façon répétée une charge d'une ressource de communication dans le système de communication ; et
des moyens de sélection (804) adaptés pour sélectionner de façon répétée une largeur de bande de canal et une cible de taux d'erreur de données pour la transmission de données sur la base des caractéristiques des données à transmettre et sur la charge de la ressource de communication dans le système de communication.

17. Noeud de communication selon la revendication 16, dans lequel le noeud est un noeud B.

18. Noeud de communication selon la revendication 16, dans lequel le noeud est un contrôleur de réseau radio (RNC).

19. Noeud de communication l'une quelconque des revendications 16 à 18, dans lequel les deuxièmes moyens d'analyse (803) sont adaptés pour analyser une charge du canal de transmission utilisé pour transmettre des données.

20. Noeud de communication l'une quelconque des revendications 16 à 19, dans lequel les moyens de sélection (804) sont adaptés pour sélectionner une nouvelle cible de taux d'erreur de données différente d'une cible de taux d'erreur de données actuellement utilisée, si la charge d'une ressource de communication dans le système de communication a atteint un niveau de seuil de charge.

21. Noeud de communication selon la revendication 20, dans lequel, si la charge d'une ressource de communication a atteint le niveau de seuil de charge et de plus la nouvelle cible de taux d'erreur de données est à un niveau de seuil de taux d'erreur fixé de manière que, si le niveau de seuil de taux d'erreur était dépassé, le rendement de transmission de données du système diminuerait, les moyens de sélection (804) sont adaptés pour sélectionner une nouvelle largeur de bande de canal différente d'une largeur de bande de canal actuellement utilisée pour la transmission de données sur la connexion.

22. Noeud de communication selon l'une quelconque des revendications 16 à 21, dans lequel les premiers moyens d'analyse (802) sont adaptés pour analyser les caractéristiques des données à transmettre sur la base d'un ou plusieurs des paramètres suivants : une taille d'un fichier à transmettre, une taille de paquet de données, un temps inter-arrivée de paquet de données, un temps d'aller-retour et une taille de fenêtre initiale.

23. Noeud de communication selon l'une quelconque des revendications 16 à 22, dans lequel le taux d'erreur de données est un taux d'erreur de bloc (BLER) de blocs de données transmis.

24. Noeud de communication selon l'une quelconque des revendications 16 à 23, dans lequel les deuxièmes moyens d'analyse (803) sont adaptés pour analyser une charge totale d'une fréquence porteuse utilisée dans une cellule dans laquelle la station mobile est située.

25. Noeud de communication selon la revendication 24, dans lequel la charge totale de la fréquence porteuse dans la cellule est analysée sur la base d'une puissance de la porteuse de la cellule.

26. Noeud de communication selon la revendication 24, dans lequel la charge totale de la fréquence porteuse dans la cellule est analysée sur la base du nombre de stations mobiles utilisant la fréquence porteuse dans la cellule.

27. Noeud de communication selon l'une quelconque des revendications 16 à 26, comprenant en outre :
un moyen de détermination adapté pour déterminer un taux d'erreur de données pour des données transmises, et
un moyen de réglage (807) adapté pour régler une puissance du canal de transmission de la connexion sur la base du taux d'erreur de données déterminé et de la cible de taux d'erreur de données sélectionnée, de telle manière que le taux d'erreur de données sera maintenu à un niveau approximativement similaire à la cible de taux d'erreur de données sélectionnée.

28. Produit programme d'ordinateur pouvant être chargé dans une mémoire d'un ordinateur numérique résidant dans un noeud de communication, dans lequel le produit programme d'ordinateur comprend des portions de code de logiciel pour exécuter le procédé selon l'une quelconque des revendications 1 à 15 quand le produit programme d'ordinateur est exécuté sur l'ordinateur.
